# EUROPÄISCHE PATENTSCHRIFT

(11) **EP 3 110 726 B1**
(45) Veröffentlichungstag und Bekanntmachung des Hinweises auf die Patenterteilung: **01.04.2020**
(21) Anmeldenummer: 15704555.0
(22) Anmeldetag: 16.02.2015
(51) Int. Cl.: B65G 17/20, B65G 17/48, B65D 33/00

(54) **HÄNGETASCHE MIT WECHSELELEMENT**
HANGING POCKET WITH REPLACEMENT ELEMENT
SAC SUSPENDU MUNI D'UN ÉLÉMENT REMPLAÇABLE

(30) Priorität: 24.02.2014 DE 102014203299
(43) Veröffentlichungstag der Anmeldung: 04.01.2017
(60) Teilanmeldung: 18180004.6
(73) Patentinhaber: RSL Logistik GmbH & Co. KG, 86899 Landsberg (DE)
(72) Erfinder: SCHÖNENBERGER, Rolf, 86899 Landsberg/Lech (DE)
(74) Vertreter: Weickmann & Weickmann PartmbB
(86) Internationale Anmeldenummer: PCT/EP2015/053204
(87) Internationale Veröffentlichungsnummer: WO 2015/124525

(56) Entgegenhaltungen:
- EP-A2- 2 196 415
- WO-A1-2014/012965
- DE-A1- 2 940 266
- DE-A1-102004 018 569
- US-A- 5 697 508

## Beschreibung

Die vorliegende Erfindung betrifft eine Hängetasche als Fördergutbehälter zum Transport von Fördergut in einer Hängefördereinrichtung, mit einer ersten Taschenseitenwand und einer zweiten Taschenseitenwand, die einander gegenüberliegend einen Fördergutaufnahmebereich zwischen sich begrenzen und in einem Klappverbindungsbereich so miteinander verbunden sind, dass sie zum Öffnen und Schließen des Fördergutaufnahmebereiches auseinanderklappbar und zusammenklappbar sind, und mit einem Anhängmittel zum Anhängen der Hängetasche an eine Führungsschienenanordnung einer Hängefördereinrichtung. Dabei weist die erste Taschenseitenwand zumindest einen starren Randkontur-Bereich auf und ist daran um eine Schwenkachse schwenkbeweglich mit dem Anhängmittel verbunden, und die zweite Taschenseitenwand ist derart mit dem Anhängmittel verbunden oder davon beaufschlagbar, dass durch Schwenken der ersten Taschenseitenwand um die Schwenkachse die erste und die zweite Taschenseitenwand auseinanderklappbar und zusammenklappbar sind.

Derartige Hängetaschen sind beispielsweise aus der WO 2014/012965 A1, welche eine Hängetasche nach dem Oberbegriff des Anspruchs 1 offenbart, bekannt. Die Hängetaschen sind so gestaltet, dass sie aus einer Transportstellung, in welcher der Fördergutaufnahmebereich weitgehend geschlossen ist und die beiden Taschenseitenwände im Wesentlichen vertikal nach unten hängen, an einer Ladestation geöffnet werden kann, gegebenenfalls unter Verbleib an der Hängefördereinrichtung, und zwar durch Schwenken der ersten Taschenseitenwand aus ihrer vertikalen Stellung heraus um die vorzugsweise horizontale Schwenkachse. Dabei kann die erste Taschenseitenwand in eine zumindest annähernd horizontale Lage gebracht werden.

Bei dieser Schwenkbewegung der ersten Taschenseitenwand kommt es zu einem automatischen Aufklappen der Hängetasche, da die zweite Taschenseitenwand von dem vorzugsweise an der Hängefördereinrichtung hängenden und nach oben gerichteten Anhängmittel so beaufschlagt oder mit diesem verbunden ist, dass sie der Schwenkbewegung der ersten Taschenseitenwand nicht in einem relevanten Maße folgen kann.

In automatisierten Warenlagern, Produktionsstätten und beim Warentransport ganz allgemein besteht häufig die Notwendigkeit, als Fördergut verschiedenartige Artikel, die sich in Gestalt, Material oder Größe erheblich unterscheiden können, zu transportieren und beispielsweise in einem Kommissionierungsverfahren zu einem Auftrag oder einer Bestellung zusammenzustellen.

Vor dem Hintergrund dieses Standes der Technik besteht die Aufgabe der vorliegenden Erfindung darin, die bekannte Hängetasche so weiter zu entwickeln, dass sie in flexibler Weise an verschiedenartige Artikel als Fördergut angepasst werden kann.

Erfindungsgemäß ist zur Lösung dieser Aufgabe eine Hängetasche nach Anspruch 1 vorgesehen.

Durch den zweiteiligen Aufbau der erfindungsgemäße Hängetasche aus der Basis-Baugruppe und dem auswechselbaren Wechselelement, kann die Hängetasche durch Verwendung verschiedenartiger Wechselelemente auf einfache Weise an verschiedenartige Artikel als Fördergut angepasst werden.

Durch geeignete Auswahl etwa eines weichen oder polsternden Materials für das Wechselelement können Hängetaschen zusammengestellt werden, die sich beispielsweise zur Aufnahme besonders hochwertiger oder kratzempfindlicher Artikel eignen.

Auch können Wechselelemente verschiedener Größe oder Elastizität verwendet werden, um Hängetaschen mit verschiedenen Volumina für Artikel unterschiedlicher Größe zu erzeugen.

Ein weiterer Vorteil der erfindungsgemäßen Hängetasche besteht darin, dass das Wechselelement wie auch die Basis-Baugruppe auf diese Weise leichter zu reinigen ist. Die Wechselelemente können beispielsweise abgenommen und separat, vorzugsweise maschinell gewaschen werden, insbesondere bei Ausbildung aus einem maschinenwaschbaren Textil-Material.

Unter der Auswechselbarkeit des Wechselelements soll verstanden werden, dass ein Wechselelement an der Basis-Baugruppe angebracht und auch wieder von dieser abgelöst werden kann, ohne die Basis-Baugruppe dabei in relevanter Weise zu beschädigen.

Der Montageaufwand und die zur Montage benötigte Zeit sind reduziert, indem das Wechselelement so ausgebildet ist, dass es mittels des Klemmbügels ohne Verwendung von Werkzeug wie Schraubendrehern oder Ähnlichem an der Basis-Baugruppe angebracht und von dieser abgelöst werden kann.

Gemäß einer bevorzugten Weiterbildung ist das Wechselelement wenigstens abschnittsweise aus einem formschlaffen Material, insbesondere Textil oder/und aus einem elastisch nachgiebigen Material, vorzugsweise aus Kunststoff, beispielsweise einer elastischen Kunststoff-Folie, ausgebildet.

Hierdurch kann sich das Wechselelement an unterschiedlich große Artikel als Fördergut anpassen und diese in der geschlossenen Stellung der Hängetasche gegen die erste Taschenseitenwand andrücken und auf diese Weise zumindest in gewissem Maße fixieren.

Auch die Ausbildung des Wechselelements als wenigstens teilweise formstabiles Element, etwa eines auswechselbar an der Basis-Baugruppe montierten stabilen Rahmens mit einer vorzugsweise elastischen Textil- oder Folien-Bespannung, oder auch als vollständig formstabiles Element, etwa als auswechselbar montierter Deckel oder Haube, soll nicht ausgeschlossen sein. Um das Wechselelement leichter an der Basis-Baugruppe anbringen zu können oder/und das Fördergut besonders gut vor äußeren Einflüssen zu schützen oder besonders sicher aufzunehmen, kann vorgesehen sein, dass das Wechselelement als höchstens auf zwei Seiten offene Hülle oder höchstens auf einer Seite offene Tasche ausgebildet ist. Das Wechselelement kann also als eine Art "Rucksack" ausgebildet sein, der auswechselbar an der Basis-Baugruppe als Tragegestell vorgesehen ist.

Gemäß einer bevorzugten Weiterbildung ist vorgesehen, dass die erste Taschenseitenwand ein Tablett umfasst und an dem Tablett schwenkbeweglich mit dem Anhängmittel verbunden ist, wobei das Wechselelement auswechselbar an dem Tablett vorgesehen ist. Das Tablett kann hierbei unterschiedliche Formen (rechteckig, rund, oval etc.) aufweisen und beispielsweise aus Hartkunststoff oder einem anderen formstabilen Material ausgebildet sein, zum Beispiel in Tiefzieh-Technik. Hierdurch wird die Stabilität der Hängetaschen erhöht. Auch ist ein vorzugsweise beschichtetes Kartonmaterial möglich, dessen Stabilität beispielsweise durch eine wabenartige Struktur erhöht sein kann.

Insbesondere zur Aufnahme von Kleinteilen kann vorgesehen sein, dass an dem Wechselelement wenigstens eine Tasche oder ein Trennelement zur Unterteilung des Fördergutaufnahmebereiches in mehrere Teilbereiche vorgesehen ist.

Es kann vorgesehen sein, dass das Anhängmittel der vorstehend beschriebenen Hängetaschen eine Einhängeinrichtung zum Einhängen von beispielsweise Kleiderbügeln aufweist, etwa in Form einer Einhängöffnung oder eines geeigneten Hakens, so dass auch Hängegut an den Hängetaschen aufgenommen und zusammen mit diesen transportiert werden kann.

Weiterhin betrifft vorliegende Erfindung ein Hängetaschen-System mit wenigstens zwei, vorzugsweise einer Vielzahl von erfindungsgemäßen Hängetaschen, wie sie zuvor beschrieben wurden.

Zur Lösung der vorstehend erwähnten Aufgabe ist hierbei erfindungsgemäß vorgesehen, dass die Hängetaschen sich in wenigstens einem aus Größe, Gestalt und Material der zweiten Taschenseitenwand bzw. des Wechselelements unterscheiden, wobei zur Reduzierung des Herstellungsaufwandes kann insbesondere vorgesehen sein, dass wenigstens die Randkontur-Bereiche und die Anhängmittel, vorzugsweise die Basis-Baugruppen für die wenigstens zwei Hängetaschen gleichartig sind, vorzugsweise für eine Vielzahl oder für alle Hängetaschen des Hängetaschen-Systems..

Ein derartiges Hängetaschen-System ermöglicht eine flexible Anpassung an verschiedenartige Artikel oder Warengruppen als Fördergut.

Bei diesem Aspekt der Zuordnung von individualisierten Hängetaschen an bestimmte Warengruppen ist die Auswechselbarkeit eines Wechselelements in erfindungsgemäßer Weise mit erheblichen Vorteilen verbunden. Durch Aufbauen der Hängetaschen jeweils aus einer Basis-Baugruppe und einem daran auswechselbar vorgesehenen Wechselelement sind die Kosten des Systems erheblich reduziert.

Insbesondere in großen Warenlagern, in welchen verschiedenartige Aufträge zusammengestellt werden und entsprechend eine Vielzahl unterschiedlicher Typen von Hängetaschen zum Einsatz kommen, kann vorzugsweise vorgesehen sein, dass die zweiten Taschenseitenwände oder die Wechselelemente jeweils mit einer vorzugsweise automatisch auslesbaren Kennung versehen sind, beispielsweise in der Form eines Strichcodes, eines 2D-Codes oder eines RFID-Transponders. Insbesondere bei Verwendung verschiedenartiger Basis-Baugruppen in einem System kann es vorteilhaft sein, zusätzlich auch die Basis-Baugruppen mit entsprechenden Kennungen zu versehen.

Derartige Kennungen erleichtern die automatisierte Auswahl bzw. das Zusammenstellen von Hängetaschen für bestimmte Artikel.

Schließlich wird auch Schutz beansprucht für eine Hängefördereinrichtung, umfassend ein Hängetaschen-System nach einem der Ansprüche 6 bis 7, mit Hängetaschen nach einem der Ansprüche 1 bis 5, eine Führungsschienenanordnung, an der die Hängetaschen geführt bewegbar sind, und separate Lager für die Basis-Baugruppen und die verschiedenen Wechselelemente.

Hierbei umfasst die Hängefördereinrichtung erfindungsgemäß wenigstens eine Station zur manuellen oder wenigstens teilweise, vorzugsweise vollständig automatisierten Zusammenstellung von Hängetaschen, die dazu eingerichtet ist, jede Hängetasche aus jeweils einer Basis-Baugruppe und einem ausgewählten Wechselelement zusammenzustellen.

Im Betrieb solch einer Hängefördereinrichtung können die Hängetaschen oder deren Bestandteile in Zuordnung zu bestimmten Warengruppen zu den betreffenden Waren herangeführt werden, so dass insoweit schon eine Vorsortierung der Hängetaschen in Abbildung auf die von ihnen zu transportierenden Waren erfolgen kann.

Nachfolgend wird die vorliegende Erfindung anhand eines bevorzugten Ausführungsbeispiels einer Hängetasche erläutert, die in den beiliegenden Figuren 1 bis 5 dargestellt ist. Dabei zeigt:
- Fig. 1: in den Teilabbildungen 5a) und 5b) das Ausführungsbeispiel der erfindungsgemäßen Hängetasche in einer Transportstellung (a) und in einer Ladestellung (b).
- Fig. 2: zeigt in den Teilabbildungen 2a) und 2b) die Basis-Baugruppe der Hängetasche aus Figur 1 in der Transportstellung (a) und der Lade-stellung (b).
- Fig. 3: zeigt einen Klemmbügel als Beispiel eines Befestigungsmittels zur auswechselbaren Befestigung des Wechselelements an der Basis-Baugruppe der Hängetasche aus Figur 1.
- Fig. 4: zeigt den Gegenstand von Figur 2b) mit eingefügtem Klemmbügel aus Figur 3, und
- Fig. 5: zeigt in den Teilabbildungen 5a) und 5b) das Wechselelement der Hängetasche aus Figur 1 in einer Vorderansicht (a) und einer Rückansicht (b), wobei in Teilabbildung 5b) der Klemmbügel aus Figur 3 in das Wechselelement eingesetzt ist.

Bei allen Figuren handelt es sich um stark vereinfachte Schemazeichnungen, die lediglich das Prinzip der Erfindung verdeutlichen sollen und insbe - sondere nicht maßgeblich zu verstehen sind. Um die Figuren nicht zu überfrachten, sind nicht alle Elemente in jeder Figur mit Bezugszeichen versehen, insbesondere in dem Fall mehrerer gleichartiger Elemente in einer Figur.

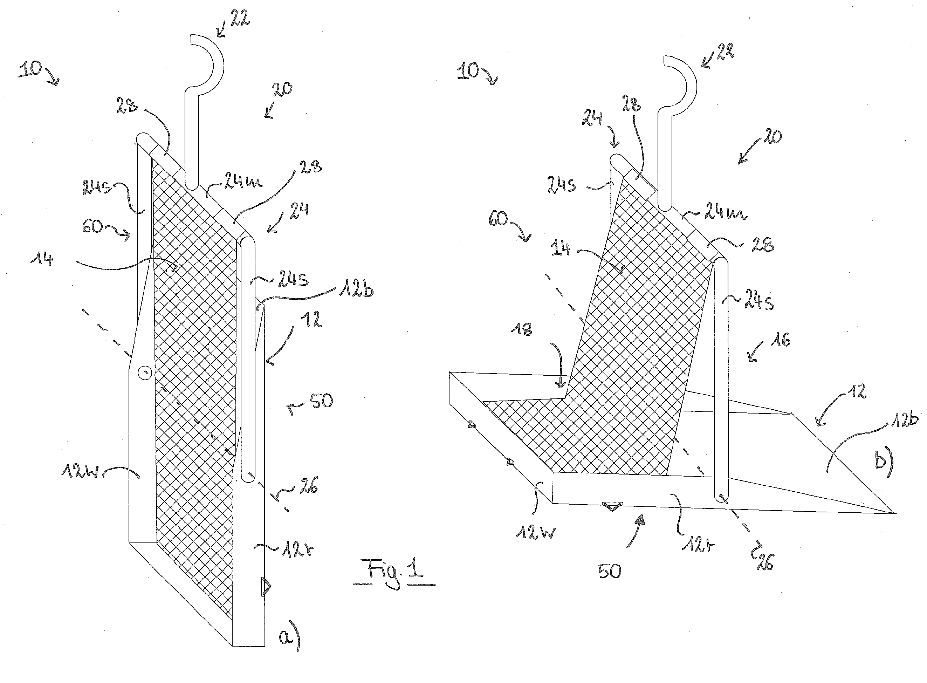

Figur 1 zeigt ein Ausführungsbeispiel einer Hängetasche 10 als Fördergut - behälter zum Transport von Fördergut in einer in den Figuren nicht weiter dargestellten Hängefördereinrichtung.

Die Hängetasche 10 umfasst eine erste Taschenseitenwand 12, vorliegend in Form eines formstabilen Tabletts, und eine zweite Taschenseitenwand 14, hier aus einem elastischen Textil-Material, die einander gegenüberliegend einen Fördergutaufnahmebereich 16 (vgl. Fig. 1b) zwischen sich begrenzen und in einem Klappverbindungsbereich 18 so miteinander verbunden sind, dass sie zum Öffnen und Schließen des Fördergutaufnahmebereiches 16 auseinander- und zusammenklappbar sind.

Figur 1a) zeigt die Hängetasche 10 in einer Transportstellung, in welcher die erste Taschenseitenwand 12 und die zweite Taschenseitenwand 14 zusammengeklappt sind und im Wesentlichen vertikal herabhängen, und Figur 1b) zeigt die Hängetasche 10 in einer Ladestellung, in welcher die erste und die zweite Taschenseitenwand 12, 14 auseinandergeklappt sind, und ein Artikel in den Fördergutaufnahmebereich 16 eingelegt oder aus diesem entnommen werden kann. Der Begriff "Laden" soll hier stets sowohl das Beladen wie auch das Entladen beinhalten.

Weiterhin umfasst die erfindungsgemäße Hängetasche 10 ein Anhängmittel 20 zum Anhängen der Hängetasche 10 an eine hier nicht weiter dargestellte Führungsschienenanordnung einer Hängefördereinrichtung.

Das Anhängmittel 20 kann, wie in dem dargestellten Ausführungsbeispiel, als mit einem Haken 22 versehener, U-förmiger Bügel 24 ausgebildet sein, der zwei parallele Schenkel 24s, erfasst, die durch ein im Wesentlichen hori - zontal verlaufendes Mittelteil 24m miteinander verbunden sind. Anstelle des Hakens 22, der hier nur als einfaches Beispiel illustriert ist, kann etwa ein üblicher (Mini-)Trolley eingesetzt werden. Insbesondere kann vorgesehen sein, dass das Anhängmittel ein Gelenk umfasst, welches es eine Drehung der an der Führungsschienenanordnung angehängten Hängetasche um eine vertikale Achse (etwa um bis zu 90°) ermöglicht, oder das Anhängmittel kann insoweit auf Torsion belastbar sein.

An dem Anhängmittel 20 kann eine Einhängvorrichtung 23 zum Beispiel in Form eines Schlitzes oder in Form eines asymmetrisch vorstehenden Auges vorgesehen sein, etwa um Kleiderbügel an dem Anhängmittel anbringen zu können, für Artikel, die aufgrund ihrer Größe oder Beschaffenheit nicht in die Hängetasche 10 hinein passen und hängend transportiert werde n sollen. Auch kann vorgesehen sein, die Konturen der in Transportrichtung vorderen Fläche und der in Transportrichtung hinteren Fläche des Anhängmittels wenigstens abschnittsweise, vorzugsweise vollständig komplementär zueinander auszubilden, so dass benachbarte Hängetaschen insbesondere im Leerzustand und in der Transportstellung ineinander "stapelbar" sind und auf wenig Platz gestaut werden können, wobei komplementären Konturen sich gegenseitig stabilisieren.

Das Anhängmittel 20 ist um eine Schwenkachse 26 schwenkbar mit einem starren Randkontur-Bereich 12r der ersten Taschenseitenwand 12 verbunden.

In dem vorliegenden Ausführungsbeispiel ist die erste Taschenseitenwand 12 als formstabiles Tablett ausgebildet, mit einem Boden 12b und einer davon auf drei von vier Seiten des Bodens 12b im Wesentlichen senkrecht abstehenden Seitenwand 12w, die den starren Randkontur-Bereich 12r bildet.

Die zweite Taschenseitenwand 14 ist an einem Ende mit dem Anhängmittel 20, genauer mit dem Mittelteil 24m des Bügels 24 verbunden, so dass durch Schwenken der ersten Taschenseitenwand 12 um die Schwenkachse 26 die erste und die zweite Taschenseitenwand 12, 14 auseinander-und zusammengeklappt werden.

Zur auswechselbarem Befestigung der zweiten Taschenseitenwand 14 an dem Bügel 24 können beispielsweise zwei hier nur schematisch angedeutete Klemmen 28 als Befestigungsmittel vorgesehen sein.

Das in den Figuren dargestellte Ausführungsbeispiel der erfindungsgemäßen Hängetasche 10 umfasst eine Basis-Baugruppe 50, die das Anhängmittel 20 und die erste Taschenseitenwand 12 umfasst, und ein Wechselelement 60, welches wenigstens einen Teil der zweiten Taschenseitenwand 14, vorliegend die gesamte Taschenseitenwand 14 umfasst und auswechselbar an der Basis-Baugruppe 50 vorgesehen ist.

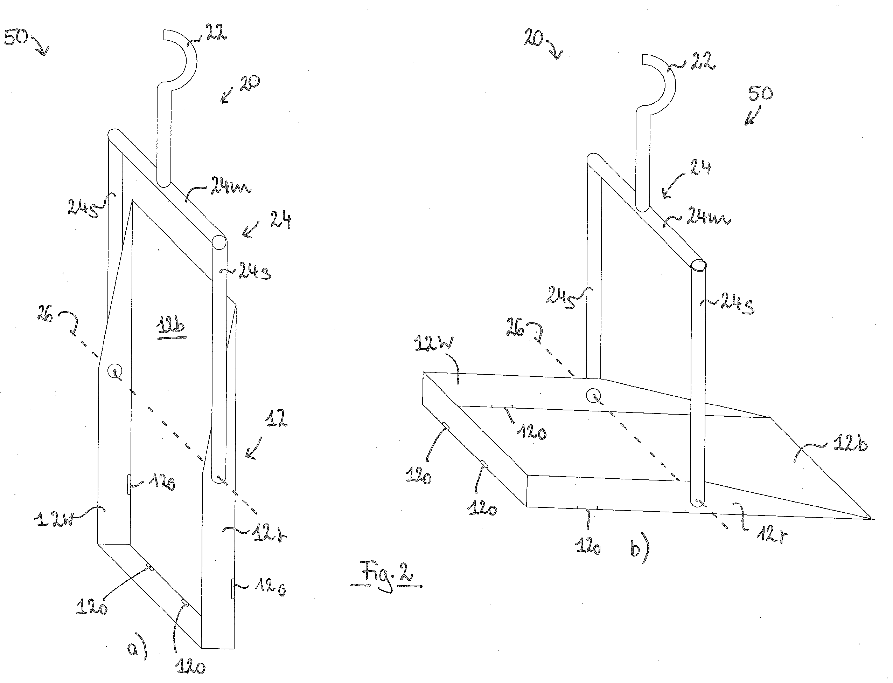

Figur 2 stellt die Basis-Baugruppe 50 der erfindungsgemäßen Hängetasche 10 ohne das Wechselelement 60 in der Transportstellung (a) und der Ladestellung (b) dar.

Hierbei ist deutlich zu erkennen, dass in dem Bereich der Kante, in welchem der Boden 12b und die Seitenwand 12w der ersten Taschenseitenwand 12 aneinander stoßen, vier Öffnungen 12o vorgesehen sind, durch ein später noch zu beschreibender Klemmbügel 70 als Befestigungsmittel hindurch gesteckt werden kann, um das Wechselelement 60 auswechselbar an der Basis-Baugruppe 50 zu fixieren.

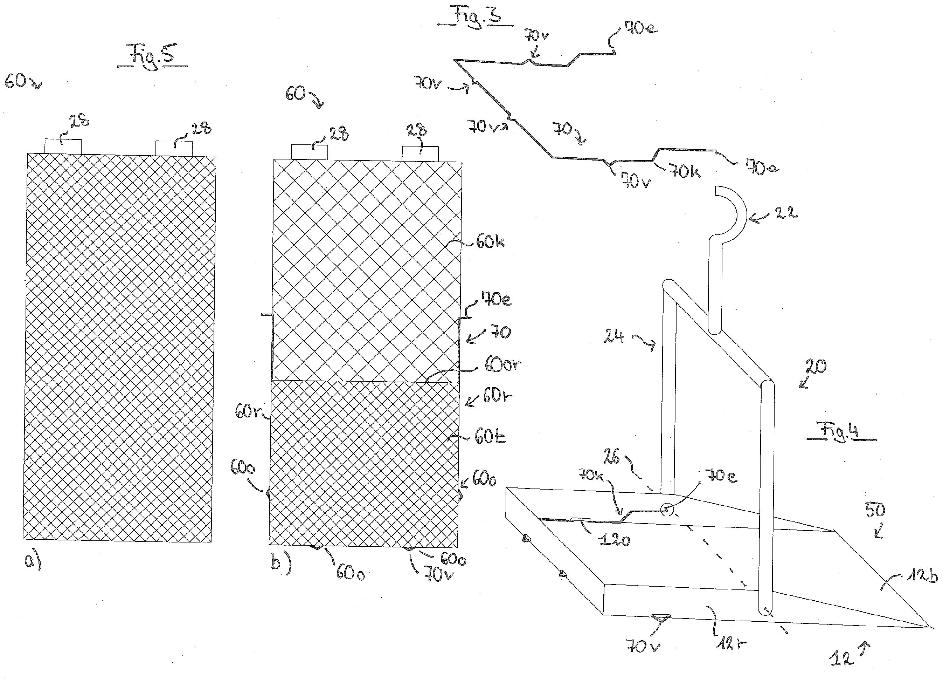

Der entsprechende Klemmbügel 70 ist isoliert in Figur 3 dargestellt. Er ist beispielsweise aus einem Metalldraht hergestellt und weist 4 Eingriffsvorsprünge 70v auf, die so angeordnet sind, dass sie in die Öffnungen 12o von dem Tablett der ersten Taschenseitenwand 12 hinein passen, wenn der Klemmbügel 70, wie in Figur 4 dargestellt, an der Basis-Baugruppe 50 montiert wird.

Die zwei nach außen abgebogenen Enden 70e des Klemmbügels 70 können dabei in eine Öffnung im Bereich der Gelenk-Verbindung zwischen dem Anhängmittel 20 und der ersten Taschenseitenwand 12 eingesteckt werden.

Im vorliegenden Ausführungsbeispiel ist das Wechselelement 60 ausgebil - det als eine Tasche aus einem elastischen Textil- oder Kunststoff-Material und ist in Figur 5 in einer Vorderansicht (a) und einer Rückansicht (b) darge - stellt. Die unterschiedlichen Seiten des Textil- bzw. Kunststoff-Materials sind dabei durch unterschiedliche Schraffuren veranschaulicht.

Wie aus einem Vergleich der Teilabbildungen 5a) und 5b) hervorgeht, ist im vorliegenden Beispiel das Wechselelement 60 aus einer Lage von einem Textil- oder Kunststoffmaterial hergestellt, welches an einem Ende umgeschlagen und an den seitlichen Rändern 60r verbunden wurde, um einen Taschenabschnitt 60t zu bilden, der sich über einen Teil von der Längserstreckung der Wechselelements 60 erstreckt. Diese Tasche 60t dient zur Aufnahme von Kleinteilen oder/und dazu, das Wechselelement 60 sicher an der Basis-Baugruppe 50 zu fixieren.

An den Taschenabschnitt 60t schließt sich ein Klappenabschnitt 60k an, der im zusammengebauten Zustand die zweite Taschenseitenwand 14 der Hängetasche 10 bildet. An dem dem Taschenabschnitt 60t gegenüberliegenden Längsende des Wechselelements 60 sind zwei Klemmen 28 zum Befestigen dieses Längsendes an dem Mittelteil 24m des Bügels 24 vorgesehen.

Am seitlichen Rand 60r des Taschenabschnitts 60t können vier Öffnungen 60o vorgesehen sein, deren Positionen den Positionen der Öffnungen 12o in dem Randbereich von der ersten Taschenseitenwand 12 entsprechen, und durch die, wie in Figur 5b) gezeigt, der Klemmbügel 70 hindurch gesteckt werden kann.

Die Position des oberen Randes 60or von dem Taschenabschnitt 60t des Wechselelements 60 kann einer Knickstelle 70k von dem Klemmbügel 70 entsprechen, dessen Position im zusammengebauten Zustand dem Klappverbindungsbereich 18 der Hängetasche entspricht.

Wird nun zunächst der Klemmbügel 70 in den Taschenabschnitt 60t von dem Wechselelement 60 eingesetzt, wie in Figur 5b) gezeigt, und dann der Klemmbügel 70 zusammen mit dem Wechselelement 60 an der Basis-Baugruppe 50 montiert, so dass die Vorsprünge 70v in die Öffnungen 12o eingreifen, und werden die Klemmen 28 an dem Mittelteil 24m von dem Bügel 24 als Anhängmittel 20 angebracht, so wird das Wechselelement 60 auswechselbar an der Basis-Baugruppe 50 fixiert, wodurch sich das in Figur 1 dargestellte Ausführungsbeispiel einer erfindungsgemäßen Hängetasche 10 ergibt.

Bei dem dargestellten Ausführungsbeispiel können verschiedene Wechsel - elemente eingesetzt werden, die sich im Material oder/und in der Größe der Taschenseitenwand oder/und der Elastizität des verwendeten Materials unterscheiden, um eine flexible Anpassung an verschiedenartige Artikel als Fördergut zu ermöglichen.

Für eine Mehrzahl oder für alle Hängetaschen kann dabei eine gleichartige Basis-Baugruppe verwendet werden, was die Kosten eines Hängetaschen-Systems reduziert und auch den Betrieb der entsprechenden Hängefördereinrichtung vereinfacht.

Zur leichteren, insbesondere automatisierten Identifizierung und Auswahl der Wechselelemente können diese (in den Figuren nicht dargestellt) jeweils mit einer Kennung versehen sein, insbesondere mit einem Barcode oder RFID-Transponder, die vorzugsweise von entsprechenden Lese-Einrichtun - gen der Hängefördereinrichtung ausgelesen werden kann.

Insbesondere können in einer solchen Hängefördereinrichtung passende Hängetaschen in Zuordnung zu bestimmten Warengruppen zu den betreffenden Waren herangeführt werden oder auch in deren Nähe gelagert werden, so dass insoweit schon eine Vorsortierung der Hängetaschen im Hinblick auf die darin zu transportierenden Waren stattfindet.

## Patentansprüche

1. Hängetasche (10) als Fördergutbehälter zum Transport von Fördergut in einer Hängefördereinrichtung, mit einer ersten Taschenseitenwand (12) und einer zweiten Taschenseitenwand (14), die einander gegenüberliegend einen Fördergutaufnahmebereich (16) zwischen sich begrenzen und in einem Klappverbindungsbereich (18) so miteinander verbunden sind, dass sie zum Öffnen und Schließen des Fördergutaufnahmebereiches (16) auseinanderklappbar und zusammenklappbar sind, und mit einem Anhängmittel (20) zum Anhängen der Hängetasche (10) an eine Führungsschienenanordnung einer Hängefördereinrichtung, wobei die erste Taschenseitenwand (12) einen starren Randkonturbereich (12r) aufweist und daran um eine Schwenkachse (26) schwenkbeweglich mit dem Anhängmittel (20) verbunden ist und wobei die zweite Taschenseitenwand (14) derart mit dem Anhängmittel (20) verbunden oder davon beaufschlagbar ist, dass durch Schwenken der ersten Taschenseitenwand (12) um die Schwenkachse (26) die erste und die zweite Taschenseitenwand (12, 14) auseinanderklappbar und zusammenklappbar sind, wobei die Hängetasche (10) eine Basis-Baugruppe (50) und ein Wechselelement (60) umfasst, wobei die Basis-Baugruppe (50) das Anhängmittel (20) und den starren Randkontur-Bereich (12r) aufweist, und wobei das Wechselelement (60) wenigstens einen Teil der zweiten Taschenseitenwand (14), vorzugsweise die gesamte zweite Taschenseitenwand (14), umfasst, **dadurch gekennzeichnet, dass** das Wechselelement (60) auswechselbar vermittels eines Klemmbügels (70) an der Basis-Baugruppe (50) vorgesehen ist.

2. Hängetasche (10) nach Anspruch 1, **dadurch gekennzeichnet, dass** das Wechselelement (60) wenigstens abschnittsweise aus einem formschlaffen Material, insbesondere Textil oder/und aus einem elastisch nachgiebigen Material, vorzugsweise aus Kunststoff, ausgebildet ist.

3. Hängetasche (10) nach einem der vorhergehenden Ansprüche,
**dadurch gekennzeichnet, dass** das Wechselelement (60) als höchstens auf zwei Seiten offene Hülle oder als höchstens auf einer Seite offene Tasche ausgebildet ist.

4. Hängetasche (10) nach einem der vorhergehenden Ansprüche,
**dadurch gekennzeichnet, dass** die erste Taschenseitenwand (12) ein Tablett umfasst und an dem Tablett schwenkbeweglich mit dem Anhängmittel (20) verbunden ist, wobei das Wechselelement (60) auswechselbar an dem Tablett vorgesehen ist.

5. Hängetasche (10) nach einem der vorhergehenden Ansprüche,
**dadurch gekennzeichnet, dass** an dem Wechselelement (60) wenigstens eine Tasche oder ein Trennelement zur Unterteilung des Fördergutaufnahmebereiches (60) in mehrere Teilbereiche vorgesehen ist.

6. Hängetaschen-System, umfassend wenigstens zwei, vorzugsweise eine Vielzahl von Hängetaschen (10) nach einem der vorhergehenden Ansprüche,
**dadurch gekennzeichnet, dass** die Hängetaschen (10) sich in wenigstens einem aus Größe, Gestalt und Material der zweiten Taschenseitenwand (14) oder des Wechselelements (60) unterscheiden, wobei wenigstens die Randkontur-Bereiche (12r) und die Anhängmittel (20), vorzugsweise die Basis-Baugruppen (50), für die wenigstens zwei Hängetaschen (10) gleichartig sind.

7. Hängetaschen-System nach Anspruch 6,
**dadurch gekennzeichnet, dass** die zweiten Taschenseitenwände (14) oder die Wechselelemente (60) jeweils mit einer vorzugsweise automatisch auslesbaren Kennung versehen sind, beispielsweise in der Form eines Strichcodes, eines 2D-Codes oder eines RFID-Transponders.

8. Hängefördereinrichtung, umfassend ein Hängetaschen-System nach einem der Ansprüche 6 bis 7 mit Hängetaschen (10) nach einem der Ansprüche 1 bis 5, eine Führungsschienenanordnung, an der die Hängetaschen (10) geführt bewegbar sind, und separate Lager für die Basis-Baugruppen (50) und die verschiedenen Wechselelemente (60), wobei die Hängefördereinrichtung wenigstens eine Station zur manuellen oder wenigstens teilweise, vorzugsweise vollständig automatisierten Zusammenstellung von Hängetaschen (10) umfasst, die dazu eingerichtet ist, jede Hängetasche (10) aus jeweils einer Basis-Baugruppe (50) und einem ausgewählten Wechselelement (60) zusammenzustellen.

## Claims

1. Suspended bag (10) as a conveyed-goods container for transporting conveyed goods in a suspended conveying device, having a first bag sidewall (12) and a second bag sidewall (14), which, opposing each other, delimit a conveyed-goods receiving area (16) between them and are connected to each other in a hinged connection area (18) in such a manner that they can be folded apart and folded together for opening and closing the conveyed-goods receiving area (16), and having a suspension means (20) for suspending the suspended bag (10) on a guide rail arrangement of a suspension conveying device, wherein the first bag sidewall (12) includes a rigid edge contouring area (12r) and thereon is connected to the suspension means (20) so as to be pivotally movable around a pivot axis (26), and wherein the second bag sidewall (14) is connected to the suspension means (20) or can be acted upon thereby in such a manner that by pivoting the first bag sidewall (12) around the pivot axis (26), the first and second bag sidewalls (12, 14) are unfoldable and foldable, wherein the suspended bag (10) comprises a base assembly (50) and an exchangeable member (60), wherein the base assembly (50) comprises the suspension means (20) and the rigid edge contouring area (12r), and wherein the exchangeable member (60) comprises at least a part of the second bag sidewall (14), preferably the entire second bag sidewall (14), **characterised in that** the exchangeable member (60) is exchangeably provided on the base assembly (50) by means of a clamping bracket (70).

2. Suspended bag (10) according to claim 1, **characterised in that** the exchangeable member (60) is formed at least in portions from a flabby material, particularly fabric and/or from an elastically resilient material, preferably plastic.

3. Suspended bag (10) according to any of the preceding claims, **characterised in that** the exchangeable member (60) is formed as an open sleeve at most on two sides or as a bag which is open at most on one side.

4. Suspended bag (10) according to any of the preceding claims, **characterised in that** the first bag sidewall (12) comprises a tray and on the tray is pivotally connected to the suspension means (20), wherein the exchangeable member (60) is exchangeably provided on the tray.

5. Suspended bag (10) according to any of the preceding claims, **characterised in that** at least one bag or a separating member is provided on the exchangeable member (60) for dividing the conveyed-goods receiving area (60) into several partial areas.

6. Suspended bag system, comprising at least two, preferably a plurality of suspended bags (10) according to any of the preceding claims, **characterised in that** the suspended bags (10) differ in at least one of the size, shape and material of the second bag sidewall (14) or of the exchangeable member (60), wherein at least the edge contouring areas (12r) and the suspension means (20), preferably the base assemblies (50), are similar for the at least two suspended bags (10).

7. Suspended bag system according to claim 6, **characterised in that** the second bag sidewalls (14) or the exchangeable members (60) are each provided with a preferably automatically readable identification, for example in the form of a bar code, a 2D code or an RFID transponder.

8. Suspended conveying device, comprising a suspended bag system according to any of claims 6 to 7 having suspended bags (10) according to any of claims 1 to 5, a guide rail arrangement, on which the suspended bags (10) are movable in a guided manner, and separate bearings for the base assemblies (50) and the various exchangeable members (60), wherein the suspended conveying device comprises at least one station for manual or at least partially, preferably fully automated assembly of suspended bags (10), which is arranged to assemble each suspended bag (10) from a respective base assembly (50) and a selected exchangeable member (60).

## Revendications

1. Sac suspendu (10) comme récipient de produits à transporter pour le transport de produits à transporter dans un convoyeur aérien, avec une première paroi latérale de sac (12) et une seconde paroi latérale de sac (14) qui délimitent entre elles de manière opposée l'une à l'autre une zone de réception de produits à transporter (16) et sont reliées entre elles dans une zone de liaison rabattable (18) de sorte qu'elles puissent être dépliées et repliées pour l'ouverture et la fermeture de la zone de réception de produits à transporter (16), et avec un moyen de suspension (20) pour la suspension du sac suspendu (10) à un agencement de rail de guidage d'un convoyeur aérien, dans lequel la première paroi latérale de sac (12) présente une zone de contour de bord (12r) rigide et est reliée au niveau de celle-ci de manière mobile en pivotement autour d'un axe de pivotement (26) au moyen de suspension (20) et dans lequel la seconde paroi latérale de sac (14) est reliée au moyen de suspension (20) ou peut être sollicitée par celui-ci de telle manière que par pivotement de la première paroi latérale de sac (12) autour de l'axe de pivotement (26) la première et la seconde paroi latérale de sac (12, 14) soient dépliables et repliables, dans lequel le sac suspendu (10) comporte un module de base (50) et un élément remplaçable (60), dans lequel le module de base (50) présente le moyen de suspension (20) et la zone de contour de bord (12r) rigide, et dans lequel l'élément remplaçable (60) comporte au moins une partie de la seconde paroi latérale de sac (14), de préférence la seconde paroi latérale de sac (14) entière, **caractérisé en ce que** l'élément remplaçable (60) est prévu de manière interchangeable au moyen d'un étrier de serrage (70) sur le module de base (50).

2. Sac suspendu (10) selon la revendication 1, **caractérisé en ce que** l'élément remplaçable (60) est réalisé au moins par sections en un matériau mou de forme, en particulier textile et/ou en un matériau flexible élastiquement, de préférence en matière plastique.

3. Sac suspendu (10) selon l'une des revendications précédentes, **caractérisé en ce que** l'élément remplaçable (60) est réalisé comme une enveloppe ouverte au plus sur deux côtés ou comme un sac ouvert au plus sur un côté.

4. Sac suspendu (10) selon l'une des revendications précédentes, **caractérisé en ce que** la première paroi latérale de sac (12) comporte une tablette et est reliée au niveau de la tablette de manière mobile en pivotement au moyen de suspension (20), dans lequel l'élément remplaçable (60) est prévu de manière interchangeable au niveau de la tablette.

5. Sac suspendu (10) selon l'une des revendications précédentes, **caractérisé en ce qu'**au niveau de l'élément remplaçable (60) au moins un sac ou un élément de séparation est prévu pour la séparation de la zone de réception de produits à transporter (60) en plusieurs zones partielles.

6. Système de sac suspendu comprenant au moins deux, de préférence une pluralité de sacs suspendus (10) selon l'une quelconque des revendications précédentes, **caractérisé en ce que** les sacs suspendus (10) se distinguent dans au moins un parmi grandeur, forme et matériau de la seconde paroi latérale de sac (14) ou de l'élément remplaçable (60), dans lequel au moins les zones de contour de bord (12r) et les moyens de suspension (20), de préférence les modules de base (50), sont similaires pour les au moins deux sacs suspendus (10).

7. Système de sac suspendu selon la revendication 6, **caractérisé en ce que** les secondes parois latérales de sac (14) ou les éléments remplaçables (60) sont pourvus respectivement d'un identifiant lisible de préférence automatiquement, par exemple sous la forme d'un code-barres, d'un code 2D ou d'un transpondeur RFID.

8. Convoyeur aérien comprenant un système de sac suspendu selon l'une des revendications 6 à 7 avec des sacs suspendus (10) selon l'une des revendications 1 à 5, un agencement de rail de guidage, au niveau duquel les sacs suspendus (10) sont mobiles de manière guidée, et des paliers séparés pour les modules de base (50) et les différents éléments remplaçables (60), dans lequel le convoyeur aérien comporte au moins un poste pour l'assemblage manuel ou au moins partiellement, de préférence complètement automatisé de sacs suspendus (10) qui est aménagé afin d'assembler chaque sac suspendu (10) à partir de respectivement un module de base (50) et un élément remplaçable (60) sélectionné.
